Europäisches Patentamt

European Patent Office

Office européen des brevets

(19)

(11) Veröffentlichungsnummer: **0 065 056**
A1

## (12) EUROPÄISCHE PATENTANMELDUNG

(21) Anmeldenummer: 81810191.7

(22) Anmeldetag: 19.05.81

(51) Int. Cl.³: **E 04 H 6/00,** B 64 F 1/00, B 64 F 1/36

(43) Veröffentlichungstag der Anmeldung: 24.11.82
Patentblatt 82/47

(84) Benannte Vertragsstaaten: **AT BE CH DE FR GB IT LI LU NL SE**

(71) Anmelder: **Geilinger AG, Werkstrasse 20, CH-8401 Winterthur (CH)**

(72) Erfinder: **Stipsicz, Josef, Goldacherweg 8, CH-8047 Zürich (CH)**

(74) Vertreter: **Wall, Erich, Dr., Hagenstrasse 15, CH-8311 Brütten (CH)**

(54) **Flughafen-Dockgebäude.**

(57) Flughafen-Dockgebäude (1), bei dem eine Passagier-Leitebene (3), eine ebenerdige Gepäck-Leitebene (4) und eine unterirdische Cargo- (Frachtgut-, freight-) Leitebene (5) übereinander angeordnet sind. Auf diese Weise kann insbesondere der Cargo-Leitfluß mit dem Passagier- und dem Reisegepäck-Fluß (Pfeil 19) integriert werden. Das Gepäck (20) braucht nach der Übernahme vom Passagier am CHECK-IN-Schalter nicht gemischt und vor Weiterleitung zu den einzelnen Dockgebäuden (1) wieder getrennt und sortiert zu werden, sondern es kann vom CHECK-IN-Schalter unmittelbar in das für die betreffende Destination bestimmte Dockgebäude (1) und in das dort positionierte Flugzeug (12) geleitet werden. Fingerdocks für Passagiere sowie Last- und Rollwagen für das Gepäck (20) werden entbehrlich.

Geilinger AG, Winterthur/Schweiz
=================================

Flughafen - Dockgebäude
————————————————

Die Erfindung betrifft ein Flughafen-Dockgebäude zum Anlegen bzw. Heranrollen (Andocken) von Flugzeugen, besonders Grossraumflugzeugen während
der Be- und Entladung. Das Dockgebäude kann Teil eines grösseren Flughafen-Abfertigungsgebäudes sein.

Bei bisherigen Gebäuden dieser Art werden Passagiere, Reisegepäck und
Cargo (= Frachtgut, freight) getrennt in speziellen Fahrzeugen von dem
Abfertigungsgebäude zum Flugzeug transportiert, z.B. Passagiere in Omnibussen, Gepäck und Cargo in kleineren oder grösseren Last- oder Rollwagen oder dgl.

Bei anderen bekannten Systemen werden zwar die Passagiere über an einem
Dockgebäude (= Teil des Abfertigungsgebäudes) angebauten Fingerdocks in
bzw. aus den Flugzeugen geleitet. Das Reisegepäck wird aber gleichwohl
mittels Last- oder Rollwagen zum Flugzeug transportiert. Dabei wird das
Reisegepäck nach Abgabe am Personenabfertigungs- (Check-in-) Schalter
mit dem für andere Destinationen bzw. Flugzeugen bestimmten Reisegepäck
zusammengefasst oder gemischt, im Gebäude weitertransportiert und schliesslich an einer Trennstelle wieder nach Destinationen bzw. Flugzeugen aufgeteilt. Darauf erst gelangt das jeweilige Gepäck in das entsprechende
Flugzeug. Für das Cargo, das aus einem mehr oder weniger weit weg liegenden Cargo-Abfertigungsgebäude kommt, werden besondere Last- oder Rollfahrzeuge verwendet, mit denen das Cargo unmittelbar zum Flugzeug befördert wird.

Die bisherigen Abfertigungs- bzw. Be- und Entladeverfahren sind relativ
kompliziert und zeitraubend und erfordern Spezialfahrzeuge und umfangreiche, bauliche Massnahmen.

Z.B. sind die bekannten Fingerdocks technisch und baulich aufwendig und können gleichwohl nur für Passagiere, nicht für Reisegepäck und/ oder Cargo verwendet werden.

Der Erfindung liegt die Aufgabe zugrunde, ein besonders in dieser Hinsicht verbessertes Dockgebäude zu schaffen, bei dem besonders auch das Cargo in den beim Be- und Entladen von Flugzeugen entstehenden Gesamtfluss integriert werden kann.

Die Erfindung ist gekennzeichnet durch eine im Höhenbereich der Passagieröffnungen des Flugzeuges angeordnete Passagier-Leitebene, ferner durch eine unterhalb davon befindliche, im wesentlichen ebenerdige Gepäck-Leitebene und schliesslich durch eine unterirdische Cargo-(Frachtgut-, freight-) Leitebene.

In einem solchen Dockgebäude lassen sich drei parallel verlaufende Leitwege (Verkehrs-Flüsse oder Abläufe), nämlich für Passagiere, Gepäck und Cargo gestalten. Durch sie können die zu befördernden Personen bzw. Gepäck- und Cargostücke gleichzeitig, ohne spezielle Zubringerfahrzeuge wie Busse, Last- oder Rollwagen usw. wetter- und temperatur-unabhängig zum Flugzeug oder von ihm weg geleitet werden. Insbesondere der Cargo-Fluss kann mit dem Personen- und Gepäckfluss integriert und daher weitgehend mechanisiert werden. Z.B. lassen sich Rollbahnen in Kanälen anwenden, die von einem meist abseits gelegenen Cargo-Abfertigungsgebäude unterirdisch zu dem betreffenden Dockgebäude und in ihm zum Flugzeug führen.

Weitere Merkmale ergeben sich aus der folgenden Beschreibung von Ausführungsbeispielen in Verbindung mit der Zeichnung und den Ansprüchen.

Fig. 1 ist ein schematischer Vertikalschnitt durch ein erfindungsgemäss ausgebildetes Flughafen-Dockgebäude,

Fig. 2 bis 4 sind zugehörige Horizontalschnitte nach Linie II/II bzw. III/III bzw. IV/IV in Fig. 1,

Fig. 5 ist ein Vertikalschnitt nach Linie V/V in Fig. 4 und

Fig. 6 ein Vertikalschnitt nach Linie VI/VI in Fig. 4 in grösserem Masstab.

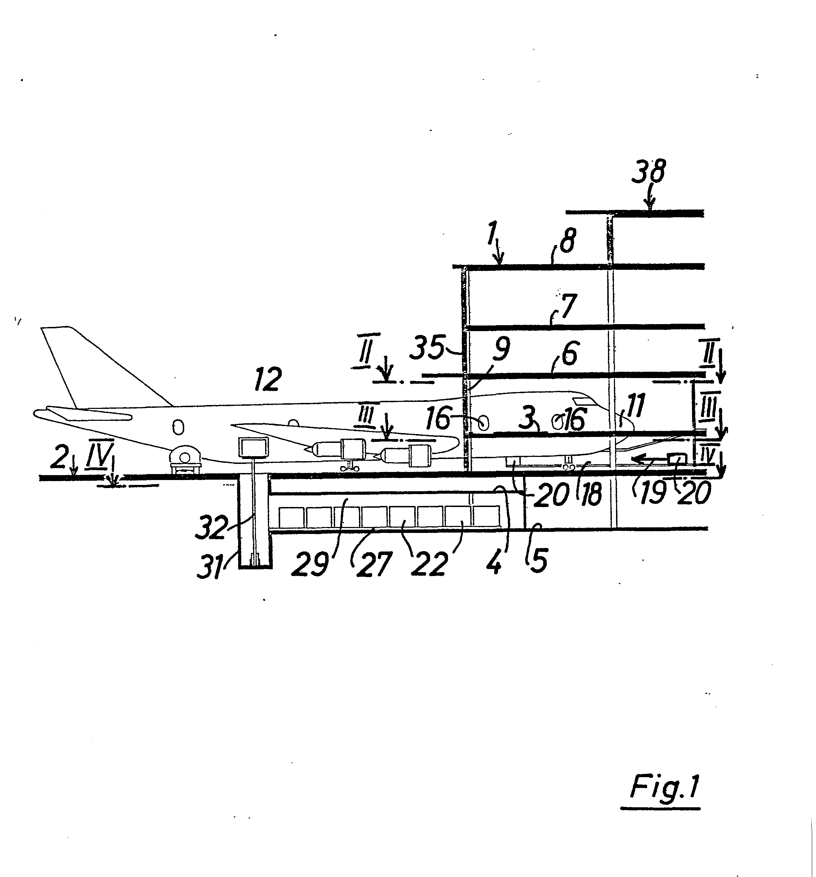

Das Dockgebäude 1 bildet den dem Flug- bzw. Rollfeld 2 des Flughafens zugekehrten Teil eines nicht vollständig gezeichneten Abfertigungsgebäudes (Flughof) 38, das sich über das rechte Ende der Fig. 1 hinaus erstreckt. Das Dockgebäude 1 enthält eine auf der Höhe der Passagieröffnungen 16 des Flugzeuges 12 befindliche Passagier-Leitebene 3, eine darunter befindliche, mit der Höhe des Rollfeldes 2 zusammenfallende, also ebenerdige Gepäck-Leitebene 4 und eine unterhalb davon angeordnete, also unterirdische Cargo- Leitebene 5. In dem Dockgebäude ist eine Ausnehmung (Hof) 9 zum Einfahren des Bugs 11 eines zu be- oder entladenden Grossraum-Flugzeuges 12 vorgesehen.

Oberhalb der Passagier-Leitebene 3 sind weitere Ebenen (Etagen) 6,7,8,z.B. zur Unterbringung von Verwaltungsstellen, Büroräumen, Restaurants usw. vorgesehen.

Die abreisenden Passagiere werden in dem Abfertigungsgebäude 38 abgefertigt (CHECK-IN) und gelangen anschliessend, z.B. auf einer Rolltreppe gemäss Pfeil 45 in eine der Leitebenen 3 entsprechende Wartehalle 36 des Abfertigungsgebäudes 38. Von hier aus passieren sie einen Kontrollschalter 13 und gelangen darauf entsprechend den Pfeilen 14 in einen Warteraum 41 des der Destination entsprechenden Dockgebäudes 1 und von dort über Schiebe- oder Rollstege 15 und Türen 16 in das Flugzeug 12.

Das nicht in die Flugzeugkabine mitzunehmende, grössere Reisegepäck 20 wird den Passagieren am Abfertigungsschalter (CHECK-IN) in dem Abfertigungsgebäude 38 abgenommen. Von hier gelangt das Gepäck z.B. über eine Rollenbahn oder ein Transportband gemäss Pfeil 46 in einen Sammelraum 37 des Abfertigungsgebäudes 38.

Von hier passiert das Gepäck 20 zunächst eine Kontrollstelle 17 und fährt dann auf einer Rollenbahn 18 entsprechend den Pfeilen 19 durch einen gegebenenfalls zur Zwischenlagerung dienenden Raum 42 des Dockgebäudes 1 zu Gepäck-Einladeöffnungen 21, durch welche es in das Flugzeug 12 gelangt.

- 4 -

0065056

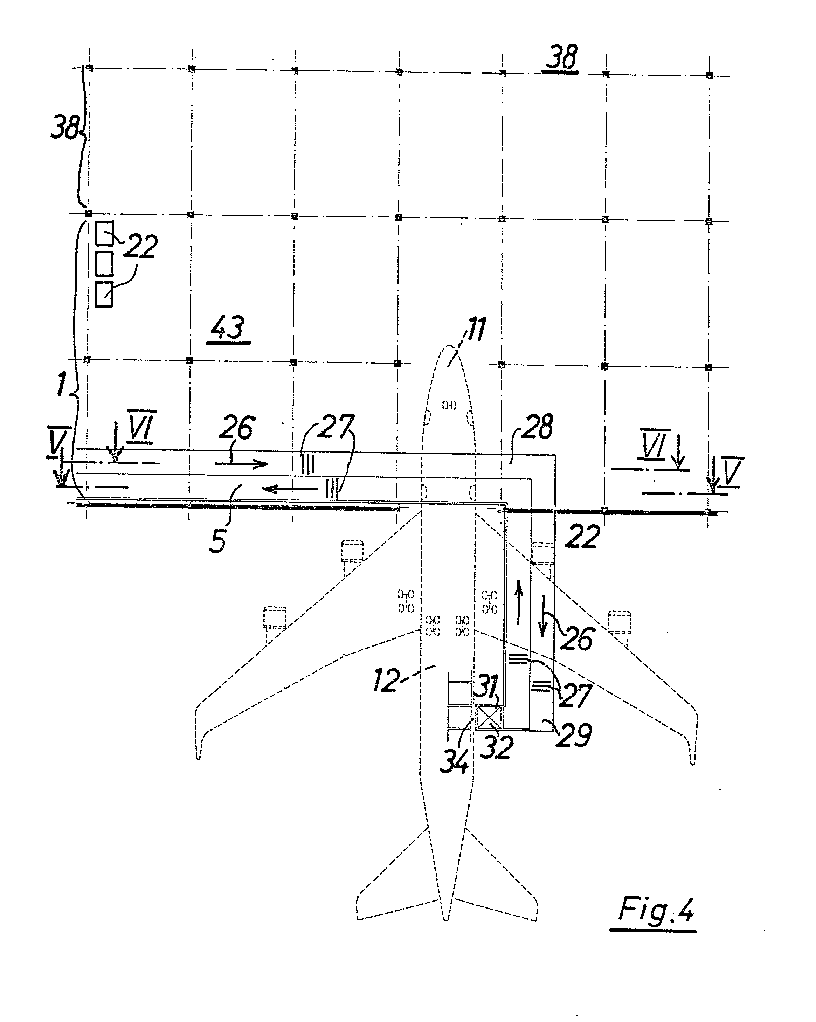

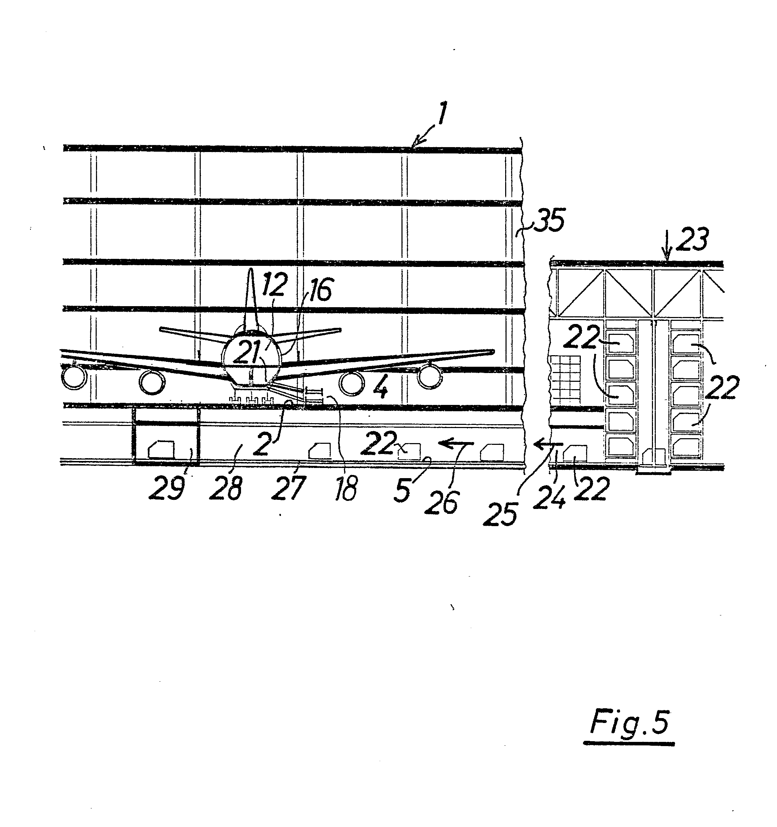

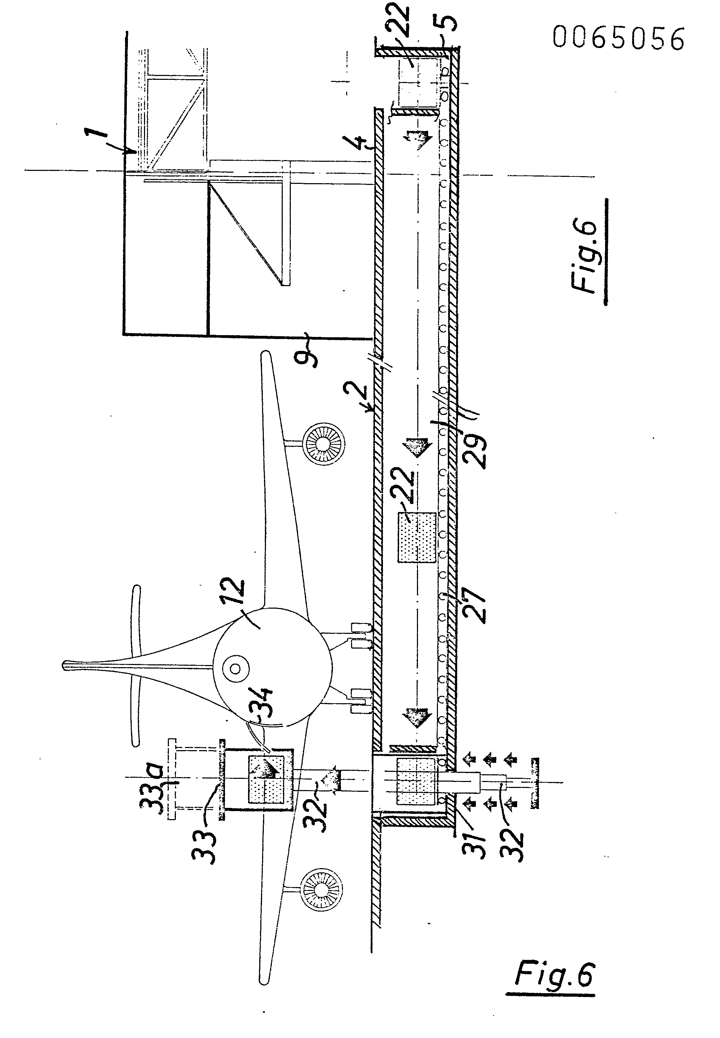

Das aus Containern 22 bestehende, disponierte und flugbereite Cargo (Frachtgut, freight) schliesslich kommt von einem mehr oder weniger weit von dem Dockgebäude 1 bzw. dem Abfertigungsgebäude 38 entfernt gelegenen, zentralen Cargo-Abfertigungsgebäude (Frachthof) 23 (Fig. 5) über einen unterirdischen Verbindungskanal 24 entsprechend Pfeil 25 auf die Cargo-Leitebene 5 des Abfertigungsgebäudes 38 bzw. Dockgebäudes 1. Hier kann das Cargo gegebenenfalls eine Zwischenlagerung in einer Halle 43 erfahren. Alsdann gelangt das Cargo 22 entsprechend Pfeilen 26 (Fig. 4,5) durch einen unterirdischen, mit Rollenbahn 27 versehenen Cargo-Kanal 28. Dieser setzt sich in einen unterhalb vom Flug- bzw. Rollfeld 2 geführten Cargo-Zubringerkanal 29 fort, an dessen Ende bei 31 eine hydraulische Hebevorrichtung 32 vorgesehen ist. Ihr oberer Teil 33 (Fig. 6) ist zur Anpassung an verschiedene Höhen der Cargo-Ladeöffnungen 34 der Flugzeuge höheneinstellbar, wie sich aus der gestrichelt eingezeichneten Position 33a ergibt.

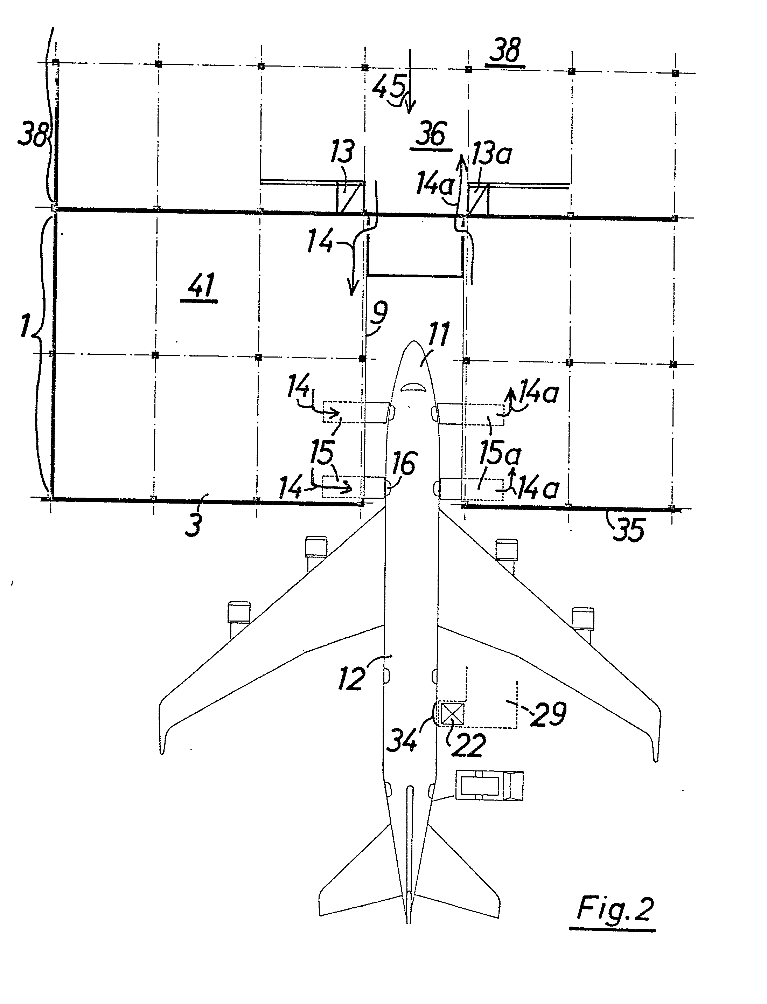

Bei ankommenden, zu entladenden Flugzeugen gelangen die Passagiere über Stege 15a (Fig. 2) in Halle 41 auf der Passagier-Leitebene 3 des Dockgebäudes 1 und entsprechend Pfeilen 14a vorbei an einem Kontrollschalter 13a in Halle 36 des Abfertigungsgebäudes 38.

Das ankommende Gepäck wird entsprechend über die Rollenbahn 18 in Halle 42 der Gepäck-Leitebene 4 geleitet. Von hier gelangt es zu einer im Abfertigungsgebäude 38 (Halle 37) befindlichen Gepäckausgabestelle (baggage claim).

Das ankommende Cargo schliesslich gelangt mittels der Hebevorrichtung 32 in den Kanal 29 und von hier auf die Cargo-Leitebene 5 des Dockgebäudes 1. Hier kann eine Zwischenlagerung in Halle 43 stattfinden. Später gelangt das Cargo über den Verbindungskanal 24 in das Cargo-Abfertigungs-Gebäude 23, von wo aus es den Adressaten zugestellt bzw. abgeholt werden kann.

Die Verkehrsleitungen (Flüsse) von Passagieren, Gepäck und Cargo verlaufen in dem Dockgebäude 1 parallel zueinander. Insbesondere ist auch der Cargo-Fluss in den Fluss von Passagieren und Gepäck integriert.

- 5 -                    0065056

Vom Abreise-Abfertigungsschalter (CHECK-IN) an laufen die Verkehrs-
flüsse für Passagiere und Gepäck parallel zueinander in das für die
betreffende Destination bestimmte Dockgebäude 1 und in das angelegte
bzw. angedockte Flugzeug 12. Zu diesem Zweck werden die für das Dockgebäude 1 bestimmten Passagiere und das zugehörige Gepäck zwischen
Abfertigungsgebäude und Dockgebäude 1 einmalig getrennt bzw. sortiert,
so dass im Dockgebäude 1 nur für die betreffende Destination bzw. das
Flugzeug 12 bestimmte Personen bzw. Gepäckstücke vorliegen, die zusammen mit dem für die gleiche Destination bestimmten Cargo in das
Flugzeug 12 befördert werden können.

In der Regel umfasst das Abfertigungsgebäude 38 eine ganze Anzahl von
Dockgebäuden 1, die an das Abfertigungsgebäude 38 angebaut sein und an
welchen die Flugzeuge andocken können.

Statt Rollenbahnen 18,27 können auch andere Beförderungsmittel, z.B.
Transportbänder, für Gepäck und Cargo verwendet werden.

Bei der beschriebenen Conception werden zur Beförderung von Passagieren,
Gepäck und Cargo vom Abfertigungsgebäude 38 bis zum Flugzeug 12 weder
Busse, noch Fingerdocks oder Lastwagen benötigt.

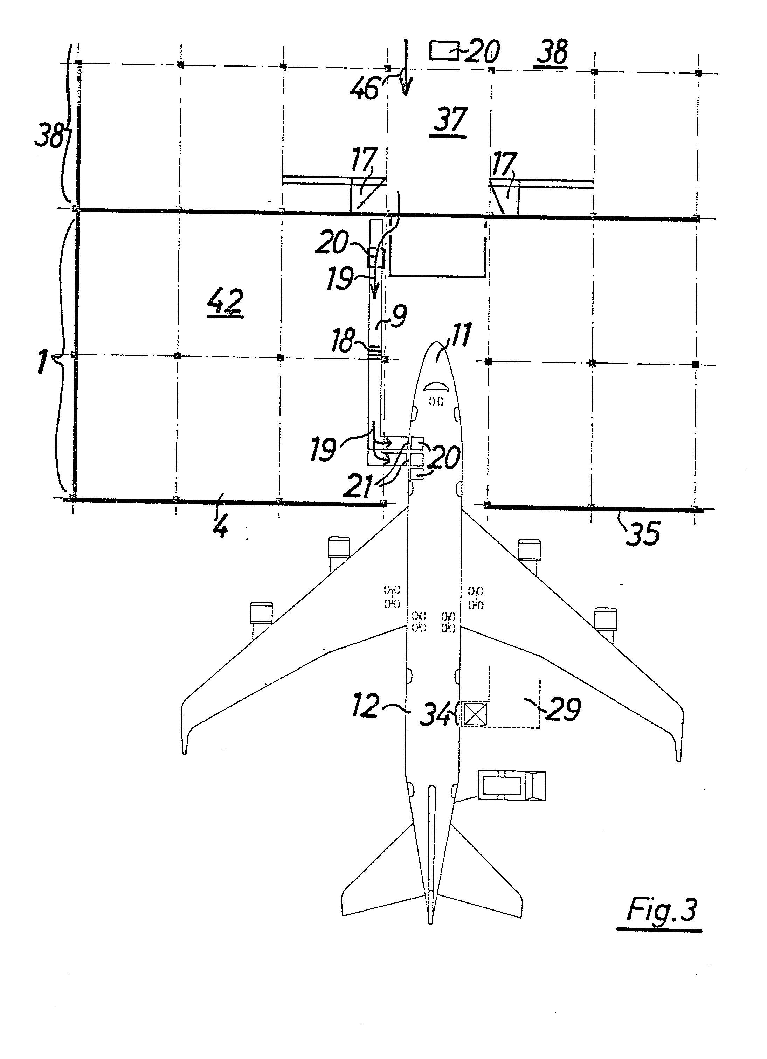

Wenn die dem Flugzeug 12 zugekehrte Front 35 (Fig. 2,3,5) anders gestaltet ist, kann auf die Ausnehmung 9 auch verzichtet und das Flugzeug 12 z.B. schräg zur Front 35 positioniert werden. Dann lässt sich gegebenenfalls ohne den Cargo-Kanal 29 auskommen. Das Cargo kann dann unmittelbar aus Kanal 28 in das Flugzeug 12 geleitet werden. Der Cargo-
Kanal 28 auf der Cargo-Leitebene 5 kann verschieden gestaltet sein und
gegebenenfalls durch die mehr oder weniger umfangreiche, unten im Dockgebäude 1 befindliche Cargo-Zwischenlagerhalle 43 ersetzt sein, aus
welcher das Cargo 22 gegebenenfalls über Kanal 29 zum Flugzeug 12 geleitet werden kann.

- 6 -                              0065056

<u>Patentansprüche</u>

1. Flughafen-Dockgebäude zum Anlegen von Flugzeugen während der Be- und Entladung, g e k e n n z e i c h n e t  durch eine im Höhenbereich·der Passagieröffnungen (16) des Flugzeuges (12) angeordnete Passagier-Leitebene (3), ferner durch eine unterhalb davon befindliche, im wesentlichen ebenerdige Gepäck-Leitebene (4) und schliesslich durch eine unterirdische Cargo- (Frachtgut-) Leitebene (5).

2. Gebäude nach Anspruch 1, dadurch gekennzeichnet, dass sich aus der unterirdischen Cargo-Leitebene (5) heraus ein unterirdischer Kanal (29) bis in den Bereich von Cargo-Ladeöffnungen (34) des Flugzeuges (12) fortsetzt.

3. Gebäude nach den Ansprüchen 1 und 2, dadurch gekennzeichnet, dass der Cargo-Leitkanal (29) mit einer Transportbahn (27) für das Cargo (22) ausgerüstet ist.

4. Gebäude nach den Ansprüchen 1 bis 3, dadurch gekennzeichnet, dass an dem den Cargo-Ladeöffnungen (34) des Flugzeugs (12) zugeordneten Ende (31) des Cargo-Leitkanals (29) eine Hebevorrichtung (32) für das Cargo (22), z.B. ein Lift, vorgesehen ist.

5. Gebäude nach den Ansprüchen 1 bis 4, gekennzeichnet durch einen vorzugsweise unterirdischen Verbindungskanal (24) zwischen dem Flughafen-Dockgebäude (1) und einem benachbarten Cargo-Lager- bzw. -abfertigungsgebäude (23).

6. Gebäude nach Anspruch 1 oder einem der folgenden, dadurch gekennzeichnet, dass wenigstens eine der drei Leitebenen (3 bis 5) Warte- (41) bzw. Lagerräume (42, 43) für Passagiere bzw. Gepäck (20) oder Cargo (22) enthält.

7. Gebäude nach einem der vorhergehenden Ansprüche, gekennzeichnet, durch einen Passagier- (36) und/oder Gepäck-Sammelraum (36, 37), welcher der Passagier-Leitebene (3) bzw. der Gepäck-Leitebene (4) -- im Sinne des Abreiseflusses -- vorgeschaltet ist.

8. Gebäude nach einem oder vorhergehenden Ansprüche, gekennzeichnet durch eine Oeffnung (9) zum Einfahren des Buges (11) von Flugzeugen (12) in das Dockgebäude (1), von der aus die Be- und Entladung wenigstens teilweise erfolgen kann.

*Fig.1*

*Fig.2*

0065056

Fig.3

Fig.4

*Fig.5*

33a

33

12

34

32

9

1

2

4

22

22

5

31

27

29

32

Fig.6

Fig.6

0065056

9/6

## EUROPÄISCHER RECHERCHENBERICHT

0065056

Nummer der Anmeldung

EP 81 81 0191.7

Europäisches
Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 4 218 034 (J.W. MAGILL) <br><br> * ganzes Dokument * <br><br> --- <br><br> US - A - 3 981 464 (R.E. DUDLEY) <br><br> * Spalte 5, Zeilen 3 bis 15; Fig. 7, 8 * <br><br> --- | 1,3, <br><br> 4,6 <br><br><br> 1,2,4 | E 04 H 6/00 <br> B 64 F 1/00 <br> B 64 F 1/36 |
| A | US - A - 3 916 588 (J.W. MAGILL) <br><br> * ganzes Dokument * <br><br> ---- | | |

**RECHERCHIERTE SACHGEBIETE (Int. Cl.³)**

B 64 F 1/00

E 04 H 6/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 06-01-1982 | v. WITTKEN |

EPA form 1503.1   06.78